# EUROPÄISCHE PATENTSCHRIFT

(11) **EP 2 215 329 B1**
(45) Veröffentlichungstag und Bekanntmachung des Hinweises auf die Patenterteilung: **25.03.2015**
(21) Anmeldenummer: 08851963.2
(22) Anmeldetag: 06.11.2008
(51) Int. Cl.: B23K 9/00, H02K 15/02, F01D 5/06

(54) **HERSTELLUNGSPROZESS FÜR EINEN ROTOR**
PRODUCTION PROCESS FOR A ROTOR
PROCESSUS DE FABRICATION D'UN ROTOR

(30) Priorität: 19.11.2007 DE 102007055379
(43) Veröffentlichungstag der Anmeldung: 11.08.2010
(73) Patentinhaber: ALSTOM Technology Ltd, 5400 Baden (CH)
(72) Erfinder: KELLER, Sorin, CH-5452 Oberrohrdorf (CH); HARTMANN, Andreas, CH-5107 Schinznach-Dorf (CH)
(86) Internationale Anmeldenummer: PCT/EP2008/065080
(87) Internationale Veröffentlichungsnummer: WO 2009/065739

(56) Entgegenhaltungen:
- EP-A- 0 665 079
- DE-A1- 2 324 388
- GB-A- 2 268 100
- US-A1- 2002 081 197

## Beschreibung

### TECHNISCHES GEBIET

Die vorliegende Erfindung betrifft einen Herstellungsprozess für einen Rotor, insbesondere einen Generator- oder Turbinenrotor zur Erzeugung und/oder Umwandlung von kinetischer und/oder elektrischer Energie.

### STAND DER TECHNIK

Es ist bekannt, Rotoren grosser Turbomaschinen von Dampf- oder Gasturbinen mittels Zusammenschweissens einzelner bearbeiteter Scheiben zu einer Einheit herzustellen. Die im Stand der Technik gängige Herstellungsweise für einen Rotor wird beispielsweise in der CH 595 011 beschrieben. Demnach wird der Rotor durch schrittweises Aneinanderfügen von einzelnen Scheiben zusammengesetzt. Dabei werden zunächst zwei zu verbindende Scheiben aneinandergepresst, erhitzt und dann zusammengeschweisst. Dann werden die weiteren Scheiben sukzessive montiert, indem die drei genannten Schritte wiederholt werden, bis der ganze Rotor vollständig ist. Alle Schritte finden in einem gemeinsamen Heizapparat statt. Die EP 0 604 754 A1 offenbart ein Verfahren zur Herstellung eines Turbinenläufers bzw. Turbinenrotors aus individuellen standardisierten Läufer-/Rotorteilen, welche parallel zueinander produziert wurden, um die Endfertigungsschritte zu minimieren.

Sämtliche Produktionsanlagen für die Herstellung von Rotoren nach dem oben beschriebenen bekannten Verfahren müssen für die Grösse des Endproduktes ausgelegt sein. Die Erstellung solch grosser Fabrikationseinrichtungen ist sehr kostenintensiv, da diese an Grenzen des physikalisch Machbaren stossen und nur mit hohem technischem Aufwand erstellt werden können. Zudem sind grosse Fabrikationseinrichtungen technisch ungeeignet und finanziell unwirtschaftlich für die Fertigung kleiner Rotoren. Dieser Nachteil wird auch in der EP 0 604 754 A1 beschrieben. Um dem schwankenden Markt gerecht zu werden, ist möglichst hohe Flexibilität erforderlich.

In der DE 23 24 388 wird erwähnt, dass das Erzeugen einer hochwertigen Wurzelnaht bei senkrecht stehender Läuferachse komplizierte und teure Schweissverfahren erfordert und dass nebst der Unkontrollierbarkeit technische Schwierigkeiten beim senkrechten Zusammensetzen grosser Läufer auftreten können. Ein weiterer in der DE 23 24 388 angesprochener Nachteil ist, dass der Läufer gemäss bekannten Verfahren, in denen alle Scheiben der Reihe nach in der Senkrechtlage des Läufers zusammengesetzt und durch Wurzelnähte zusammengeschweisst werden, im angewärmten Zustand aus der Senkrechtin die Waagerechtlage umgelegt werden muss. Die DE 23 24 388 erwähnt das Erstreben nach einer Vereinfachung des technologischen Prozesses, einer Erhöhung der Arbeitsproduktivität und einer Verminderung der Kapitalanlagen. Diese Aufgaben werden in der DE 23 24 388 dadurch gelöst, dass der Läufer in der Waagerechtlage zusammengesetzt und geschweisst wird, so dass keine Umlagerung nach dem Zusammensetzen nötig ist.

Die CH 595 011 beschreibt die Anwendung des WIG-Schweissverfahrens (Wolfram-Inert-Gas-Schweissverfahren) zur Verbindung einer Scheibe mit einer nächsten in horizontaler Richtung, und die Durchführung eines UP-Schweissverfahrens (Unter-Pulver-Schweiss-Verfahren) zum Auffüllen der übrig bleibenden Nuten. Sukzessiv wird dabei eine Scheibe an die andere gefügt, gefolgt von Vorwärmen, Vorschweissen und Fertigschweissen, bevor die nächste Scheibe in horizontaler Richtung axial angesetzt wird und die Vorgänge wiederholt werden. Es wird darin erwähnt, dass die Grösse des Heizkastens jeweils nach dem Vorschweissen für das Fertigschweissen auf die neue Länge des Scheibenstapels ausgefahren bzw. auf die sukzessiv wachsende Rotorlänge angepasst werden muss, da alle Herstellungsschritte in einem gemeinsamen Apparat ausgeführt werden. Die CH 595 011 offenbart, dass jeweils zwei zusätzliche Scheiben vorgewärmt und vorgeschweisst werden können, damit dann im UP-Verfahren jeweils zwei Nuten gleichzeitig gefüllt werden können, da das UP-Verfahren sehr lange dauert. So könnte der Heizkasten in seiner Grösse jeweils um zwei Elemente auf einmal expandiert werden. Der Rotor wird am Schluss, nachdem sukzessive alle Scheiben angeschweisst wurden, einem Spannungsarmglühverfahren und dann einer Ultraschallprüfung unterzogen.

Das Dokument EP0665 079 beschreibt ein Verfahren zur Fertigung von insbesondere Rotoren grosser Maschinen aus scheiben- oder hohlzylinderförmigen Schmiedestücken. Zum Zwecke der Erhöhung der Wirtschaftlichkeit des Herstellungsverfahrens und des Einsatzes vollautomatischer Arbeitsschritte unter Gewährleistung höchster Qualität der Nähte werden diese Schmiedestücke stirnseitig derart ausgebildet, dass benachbarte Teile eine Zentrierversatzung sowie unterschiedlich dimensionierte Engspalte aufweisen. Die Schweissung erfolgt in zwei Etappen: zunächst werden im Wurzelbereich mittels vollautomatischen WIG-Schweissens mehrlagige Schweissraupen aufgebracht und anschliessend wird der Rotor mittels eines UP-Schweissverfahrens fertiggeschweisst. Es ist in der Schrift offenbart, dass das Erzeugen der Grundnaht im Wurzelbereich bei senkrecht stehender Läuferachse erfolgt. Anschliessend wird der vorgeschweisste Rotor aus der Vertikalen in die Horizontale gekippt. In horizontaler Lage wird daraufhin das Verschweissen der Rotorteile zu Ende geführt.

Wie bereits im Zusammenhang mit dem eingangs referierten Verfahren dargelegt, müssen auch hier die Produktionsanlagen für die Grösse des Endprodukts ausgelegt sein.

### DARSTELLUNG DER ERFINDUNG

Der Erfindung liegt demnach die Aufgabe zugrunde, einen Herstellungsprozess für einen Rotor zu entwickeln, welcher die Nachteile aus dem Stand der Technik überwindet.

Die Lösung dieser Aufgabe wird dadurch erreicht, dass ein Verfahren zur Herstellung eines aus scheiben- und/oder trommelförmigen Elementen, insbesondere Scheiben, zusammengeschweissten Rotors zur Verfügung gestellt wird, wobei mittels einer Einrichtung diese Scheiben aufeinanderfolgend entlang einer Längsachse A axial zusammengefügt und in einem zweistufigen Schweissverfahren geschweisst werden, und wobei die Scheiben in einer horizontalen Lage vorgedreht werden, anschliessend in vertikaler Richtung bis zu einer vorbestimmten Grösse aufeinander gestapelt werden, wobei nur das erste Schweissverfahren ausgeführt wird, während eine Längsachse der zusammengefügten Scheiben sich noch in vertikaler Lagerung befindet, und wobei die durch das erste Schweissverfahren vorgeschweissten gestapelten Scheiben anschliessend wieder in die Horizontale gekippt werden, und dann das zweite Schweissverfahren an den mit ihrer Längsachse horizontal ausgerichteten gestapelten Scheiben ausgeführt wird, anschliessend an das zweite Schweissverfahren die vorgeschweissten Scheiben wieder in die Vertikale gekippt werden und in einer vertikalen Ausrichtung ihrer Längsachse einer Wärmebehandlung in einem Spannungsarmglühverfahren unterzogen werden, wobei die Wärmebehandlung lokal stattfindet, dann nach der Wärmebehandlung die aneinandergeschweissten Scheiben wieder in die Horizontale gekippt werden, und dass diese in einer horizontalen Ausrichtung ihrer Längsachse einer abtragenden Drehbearbeitung unterzogen werden.

Mit diesem Herstellungsverfahren lassen sich Rotoren mit grösseren Abmassen erstellen, grösser als Monoblockwellen im Schmiedeverfahren. Für die grösseren Rotordimensionen müssen so im Gegensatz zum Stand der Technik nur einzelne Produktionsanlagen ausgelegt sein.

Gemäss einer ersten bevorzugten Ausführungsform ist das erste, auch als Vorschweissen bekannte Schweissverfahren eine Grundnahtschweissung, inbesondere bevorzugt eine Wolfram-Inert-Gas-Schweissung, und das zweite Schweissverfahren eine Füllnahtschweissung, insbesondere bevorzugt eine Unter-Pulver-Schweissung, am meisten bevorzugt ein Doppeldraht-Tandem-Engspalt-Verfahren. Bei der Grundnahtschweissung wird im Wesentlichen die Nut zwischen zwei benachbarten Scheiben lediglich in der Tiefe, das heisst nahe der zentralen Bohrung der Scheiben versiegelt, sodass der Scheibenstapel kippbar ist. Der wesentliche Anteil der Nut bleibt nach dem Vorschweissen unausgefüllt. Bei der Füllnahtschweissung wird die Nut aufgefüllt, was in der Regel mit Hilfe von Zusatzmaterial in Form von mindestens einem Schweissdraht geschieht.

Der Rotor wird vorteilhafterweise nach dem zweiten Schweissverfahren und gegebenenfalls einer abtragenden Drehbearbeitung geglüht und bevorzugterweise zusätzlich einer Qualitätsprüfung unterzogen. Die Qualitätsprüfung kann beispielsweise mit Ultraschall durchgeführt werden.

Nach der Wärmebehandlung werden gemäss einer weiteren bevorzugten Ausführungsform der vorliegenden Erfindung die aneinandergeschweissten Scheiben wieder in die Horizontale gekippt und vorzugsweise in einer horizontalen Ausrichtung ihrer Längsachse einer Qualitätsprüfung, insbesondere mittels Ultraschall, unterzogen.

Eine weitere bevorzugte Ausführungsform der vorliegenden Erfindung zeichnet sich dadurch aus, dass der Rotor, nachdem er aus gestapelten Scheiben zusammengeschweisst wurde, einer lokalen Wärmebehandlung, insbesondere bevorzugt einem lokalen Spannungsarmglühverfahren, unterzogen wird, wobei lediglich Schweissnähte, die während des Schweissverfahrens entstanden sind, geglüht werden, und wobei insbesondere Induktivelemente und/oder Widerstandselemente angewandt werden. Dadurch lässt sich der Einsatz einer grossen Heizkammer vermeiden, was finanzielle Einsparungen beim Herstellungsprozess zur Folge haben kann.

Am Rotor kann zudem in einem letzten Herstellungsschritt eine Qualitätssicherung mittels Ultraschall, bevorzugt nur an lokalen Stellen, insbesondere bevorzugt nur an Schweissnähten, ausgeführt werden. Dies erspart den Einsatz eines der Grösse des gesamten Rotors angepassten Glühofens. Auf diese Weise können ebenfalls Kosten eingespart werden.

Gemäss einer nächsten bevorzugten Ausführungsform wird beim ersten Schweissverfahren und/oder beim zweiten Schweissverfahren mindestens ein Zusatzdraht verwendet. Dieses als Schweissdraht geformte Zusatzmaterial kann aus dem Grundwerkstoff des Rotors bzw. der Scheiben oder der geschmiedeten Elemente gezogen werden. Diese Homogenität ist besonders vorteilhaft. Der Grundwerkstoff und/oder das Material des Schweissdrahtes ist vorzugsweise ein "niedriglegierter, warmfester, superclean- NiCrMo-Typ".

Das erfindungsgemässe Verfahren hat, wie bereits eingangs erwähnt, den Vorteil, dass nicht alle Produktionsmaschinen so gross sein müssen, dass sie die gesamte Rotorlänge aufnehmen können. Gemäss einer weiteren bevorzugten Ausführungsform sind eine im Wesentlichen vertikal ausgerichtete Produktionsanlage und eine im Wesentlichen horizontal ausgerichtete Produktionsanlage geeignet, die Gesamtlänge eines Rotors aufzunehmen. Die anderen Produktionsanlagen können kleiner sein.

Gemäss einer besonders bevorzugten Ausführungsform der vorliegenden Erfindung wird der Rotor aus zwei aus Scheiben vorgefertigten Rotorhälften zusammengeschweisst. Gemäss einer weiteren bevorzugten Ausführungsform werden vorzugsweise mindestens zwei, bevorzugt drei bis zehn, insbesondere bevorzugt fünf bis sieben Scheiben zu einer Rotorhälfte zusammengefügt. Die Scheiben werden vorzugsweise in vertikaler Ausrichtung bis zum Erreichen einer vorbestimmten Länge einer Rotorhälfte aufeinander gestapelt. Die derart zusammengesetzten Rotorhälften werden vorzugsweise nach einem Verfahren nach einem der Ansprüche 1-5 hergestellt. Dabei besitzt jede Rotorhälfte eine Basis und einen Körper, wobei die Basis einer ersten Rotorhälfte an die Wurzel einer zweiten Rotorhälfte geschweisst wird.

Vorzugsweise wird der Rotor in einem zweistufigen Schweissverfahren aus den zwei vorgefertigten Rotorhälften zusammengeschweisst. Dabei ist es vorteilhaft, wenn das erste Schweissverfahren in einer vertikalen Ausrichtung der Längsachse der Rotorhälfte erfolgt und das zweite Schweissverfahren in einer horizontalen Ausrichtung der Längsachse der Rotorhälfte. Zur Verbindung der beiden Rotorhälften werden vorteilhafterweise zuerst eine Grundnahtschweissung, bevorzugterweise eine Wolfram-Inert-Gas-Schweissung, und anschliessend eine Füllnahtschweissung, bevorzugterweise eine Unter-Pulver-Schweissung durchgeführt.

Eine weitere bevorzugte Ausführungsform der Erfindung, in der zwei Rotorhälften zu einem Rotor zusammengeschweisst werden, zeichnet sich dadurch aus, dass der aus zwei Rotorhälften zusammengesetzte Rotor in vertikaler Ausrichtung in einem ersten Schweissverfahren vorgeschweisst wird, dass der vorgeschweisste Rotor in die Horizontale gekippt wird und in horizontaler Ausrichtung in einem zweiten Schweissverfahren nachbearbeitet wird. Der Rotor wird anschliessend wieder in die Vertikale gekippt, wobei der Rotor in der vertikalen Ausrichtung einem Spannungsarmglühverfahren, bevorzugt nur an lokalen Stellen, insbesondere bevorzugt nur an geschweissten Stellen, unterzogen wird. Vor der Wärmebehandlung kann der Rotor gegebenenfalls zusätzlich einer abtragenden Drehbearbeitung unterzogen werden, wobei diese in Abhängigkeit der Ausrichtung der entsprechenden Maschine entweder in horizontaler oder in vertikaler Position des Rotors erfolgen kann.

Gemäss einer besonders bevorzugten Ausführungsform der Erfindung besteht ein Rotor aus zwei Rotorhälften gleicher Länge. Es ist aber auch möglich, dass der Rotor aus zwei Rotorhälften zusammengesetzt wird, die unterschiedliche Längen aufweisen, das heisst, die beispielsweise aus einer unterschiedlichen Anzahl von Scheiben zusammengesetzt sind.

Der erfindungsgemässe mehrstufige Herstellungsprozess ist insbesondere auf die Herstellung eines Rotors gerichtet, welcher aus vorgefertigten Rotorhälften besteht. Eine Rotorhälfte wird vorzugsweise durch das Zusammenschweissen von einzelnen, vorgedrehten und bearbeiteten Scheiben hergestellt, was Schritt für Schritt parallel zu der Herstellung anderer Rotorhälften erfolgt. Die Bearbeitungsschritte Vordrehen und Zusammensetzen der einzelnen Scheiben zu Rotorhälften, Vorschweissen, Fertigschweissen und Wärmebehandlung jeder Rotorhälfte sind bevorzugterweise vollständig abzuschliessen, bevor diese vorgefertigten Rotorhälften zu einem Rotor zusammengeschweisst werden. Bevorzugterweise wird jede Rotorhälfte fertig vorbearbeitet, bevor die beiden Hälften zu einer Rotoreinheit zusammengeschweisst werden, und der Rotor als Ganzes erst am Ende des Herstellungsprozesses nachbearbeitet wird.

Sowohl beim ersten Schweissverfahren, welches bevorzugterweise eine Grundnahtschweissung, und insbesondere bevorzugt ein WIG-Verfahren ist, als auch beim zweiten Schweissverfahren, welches bevorzugterweise eine Füllnahtschweissung, insbesondere bevorzugt ein UP-Verfahren ist, ist es vorteilhaft, wenn Zusatzmaterial, wie Zusatzdraht, verwendet wird. Dieser Schweissdraht besteht vorteilhafterweise aus dem gleichen Material wie die einzelnen Schmiedeteile, beispielsweise die Scheiben. Der Draht kann somit aus dem Grundwerkstoff der Rotorenelemente bzw. der Elemente des geschweissten Generators gezogen werden. Besonders bevorzugt ist es, wenn der Grundwerkstoff ein sogenannter "niedriglegierter, warmfester, superclean-NiCrMo-Typ" ist.

### KURZE ERLÄUTERUNG DER FIGUREN

Die Erfindung soll nachfolgend anhand von Ausführungsbeispielen im Zusammenhang mit den Zeichnungen näher erläutert werden. Es zeigen:
- Fig. 1: eine schematische Ansicht des ersten Herstellungsschrittes, bzw. des Vordrehens einzelner Scheiben;
- Fig. 2: eine schematische Ansicht des zweiten und dritten Herstellungsschrittes, bzw. des Aufbaus einer Rotorhälfte aus einzelnen Scheiben, sowie des ersten Schweissprozesses, in welchem eine Rotorhälfte im WIG-Verfahren vorgeschweisst wird;
- Fig. 3: eine schematische Ansicht des vierten Herstellungsschrittes, bzw. des zweiten Schweissprozesses, in welchem eine vorgeschweisste Rotorhälfte im UP-Verfahren nachbearbeitet wird;
- Fig. 4: eine schematische Ansicht des fünften Herstellungsschrittes, bzw. der Wärmebehandlung einer vorgefertigten Rotorhälfte in einem Spannungsanglühofen;
- Fig. 5: eine schematische Ansicht des sechsten und siebenten Herstellungsschrittes, bzw. der Endbearbeitung einer Rotorenhälfte und der Qualitätskontrolle unter Ultraschall;
- Fig. 6: eine schematische Ansicht des achten und neunten Herstellungsschrittes, bzw. des Zusammenbaus von zwei Rotorenhälften zu einem Rotor und des Vorschweissens an den Kontaktflächen der beiden Rotorhälften;
- Fig. 7: eine schematische Ansicht des zehnten Herstellungsschrittes, bzw. des Fertigschweissens des Rotors;
- Fig. 8: eine schematische Ansicht des elften und zwölften Herstellungsschrittes, bzw. der lokalen Wärmebehandlung des Rotors und der Qualitätskontrolle.

### WEGE ZUR AUSFÜHRUNG DER ERFINDUNG

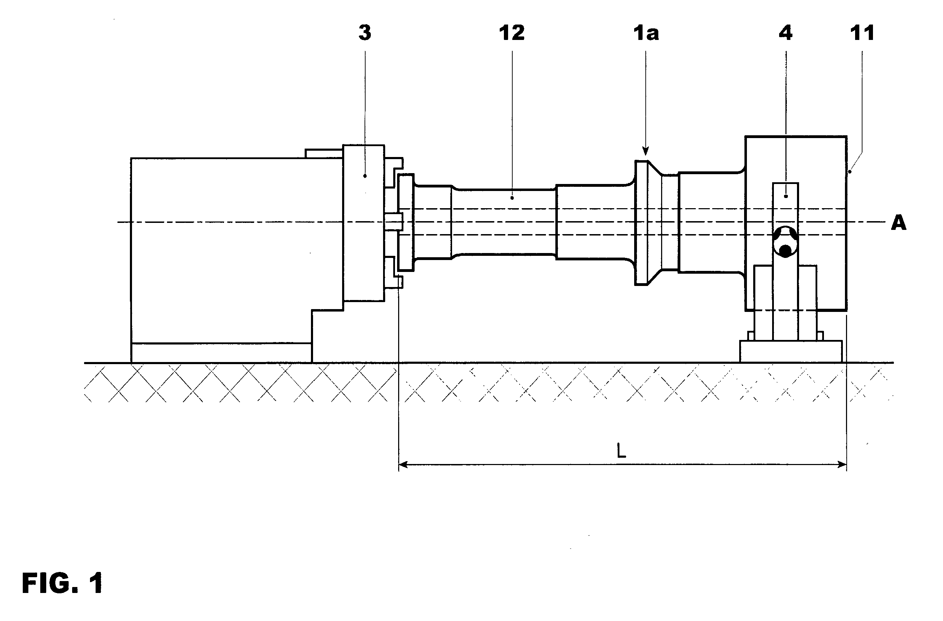

Fig. 1 zeigt eine schematische Ansicht des ersten Herstellungsschrittes, in welchem ein erster Teil bzw. eine einzelne Scheibe vorgedreht wird. Unter einer Scheibe wird ein axialer Teilabschnitt des Rotors 2 in Bezug auf die Längsachse A des Rotors 2 verstanden, wobei die axiale Länge der Scheibe auch grösser sein kann als deren Durchmesser, sodass die Scheibe durchaus auch ein trommelförmiges Rotorelement sein kann. Die Scheibe weist bevorzugterweise eine zentrale Bohrung auf. Eine solche Scheibe wird zum Zwecke des Vordrehens in axialer Richtung in Bezug auf ihre Längsachse A im Wesentlichen horizontal in eine Maschine eingespannt, wobei die Einspannung bevorzugt zwischen zwei Spannbacken erfolgt. Während ihrer Einspannung in der betreffenden Maschine ist die Scheibe vorzugsweise frei um Ihre Längsachse A drehbar.

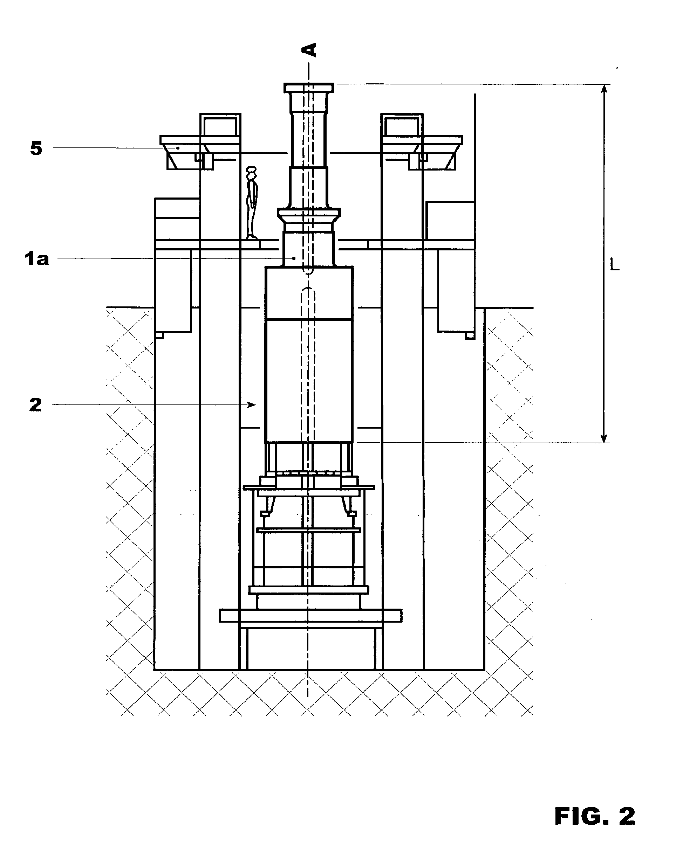

In Fig. 2 ist eine schematische Ansicht des zweiten und dritten Herstellungsschrittes, bzw. des Aufbaus einer Rotorhälfte 1 a aus einzelnen Scheiben, sowie des ersten Schweissprozesses dargestellt. Die vorgedrehten Scheiben werden zunächst, entgegen der Empfehlung der DE 23 24 388, in im Wesentlichen vertikaler Lage axial in Bezug auf die Längsachse A einer Scheibe aufeinander gestapelt. Die Anzahl der zusammengefügten Scheiben variiert je nach Rotorgrösse. In der Regel werden mindestens zwei, bevorzugt drei bis etwa zehn Scheiben, besonders bevorzugt fünf bis sieben, Scheiben aufeinandergesetzt, die dann zusammen eine Rotorhälfte bilden. Die Stapelung der einzelnen Scheiben geschieht im allgemeinen pyramidenartig in vertikaler Richtung. Die Scheiben können verschiedene Durchmesser aufweisen. Bevorzugterweise ist die unterste Scheibe des Scheibenstapels diejenige mit dem grössten Aussendurchmesser. In Figur 2 ist zur Verdeutlichung der Rotordimensionen ein Mensch links oben dargestellt. Aus der Figur lässt sich ableiten, dass eine Rotorhälfte 1a, wie sie hier dargestellt ist, eine Grösse von circa dem Fünffachen der Grösse eines erwachsenen Menschen aufweist. Geht man davon aus, dass ein durchschnittlicher erwachsener Mensch ca. 1.60-1.80 Meter gross ist, beläuft sich die axiale Länge einer Rotorhälfte 1 a,1 b ca. auf acht bis neun Meter. Die axiale Länge einer Rotorhälfte 1 a,1 b kann aber, je nachdem, wie viele Scheiben zusammengefügt werden und je nach Grösse der herzustellenden Maschine, ca. zwei bis zwölf Meter, bevorzugt vier bis zehn Meter, insbesondere bevorzugt circa sieben bis neun Meter betragen. Der gesamte Rotor 2 weist dann eine Länge von vier bis 24 Meter, bevorzugt acht bis 20 Meter, insbesondere bevorzugt 14-18 Meter auf. Dabei ist unter einer Rotorhälfte 1a,1b nicht nur ein axialer Rotorabschnitt, der 50% der Länge eines Gesamtrotors 2 aufweist, zu verstehen, sondern auch ein Rotorabschnitt, der einen anderen Anteil eines Gesamtrotors 2 ausmacht. Somit ist es nicht zwingend nötig, dass der Rotor 2 aus zwei gleich langen Rotorhälften 1 a,1 b zusammengefügt ist, sondern es ist auch möglich, dass eine Rotorhälfte 1a,1b mehr oder weniger Scheiben aufweist als die andere Hälfte.

In der Mitte der zylindrischen Scheiben ist ein Versatz angeordnet. Das heisst, eine Scheibe hat an ihrer Oberseite einen zentralen ringförmigen Vorsprung bzw. eine Befestigungslippe, welche(r) in eine entsprechende zentrale ringförmige Ausnehmung oder Nut an der Unterseite der in vertikaler Richtung oben aufgesetzten Folgescheibe eingefügt wird. Die Folgescheibe hat wiederum an ihrer Oberseite einen ringförmigen Vorsprung, welcher in eine entsprechende ringförmige Ausnehmung an der Unterseite der in axialer Richtung in senkrechter Lage oben aufgesetzten nächsten Folgescheibe einfügbar ist. Die Stapelung der Scheiben kann aber auch über andere stapelbare korrespondierende Strukturen zwischen benachbarten Scheiben erfolgen.

Die zu schweissende Nut zwischen zwei benachbarten gestapelten Scheiben hat in der Regel eine Tiefe von ca. 100-500 mm, bevorzugt 250-400 mm, insbesondere bevorzugt etwa 300 mm, gemessen in radialer Richtung des Scheibenzylinders. Die Nutbreite in axialer Richtung beträgt etwa 10-30 mm, bevorzugt ca. 20 mm.

Die Befestigungslippen der einzelnen Scheiben werden dann, immer noch in im Wesentlichen vertikaler Position, in einem ersten Schweissprozess in der Tiefe der Nut in einem Vorschweissprozess zusammengeschweisst. Dieser erste Schweissprozess, welcher einer Grundnahtschweissung entspricht, ist vorzugsweise ein automatisches Wolfram-Inert-Gas-Schweissverfahren (WIG-Schweissen). Der überlappende Versatz zwischen zwei benachbarten Scheiben ergibt das Schweissgut, bevorzugterweise zusammen mit mindestens einem Schweissdraht als Zusatzmaterial. Der Schweissprozess wird bis auf eine umlaufende Restnut von ca. 10-30 mm durchgeführt, die Nut zwischen zwei benachbarten Scheiben wird bis auf einen Ring von 9-15 mm Breite mit Zusatzmaterial aufgefüllt. Eine breite umlaufende Nut bleibt somit im Wesentlichen leer. Das Vorschweissen dient somit im Wesentlichen der Vorbereitung des "Scheibenstapels" auf den Kippvorgang in die Horizontale. Im Wesentlichen wird die ringförmige Naht um die zentrale Bohrung herum versiegelt, sodass in der Tiefe der Nut zwischen den einzelnen Scheiben die benachbarten Scheiben provisorisch zusammenhalten, so dass sie gekippt werden können, ohne dass der "Scheibenstapel" auseinanderfällt.

Beim Wolfram-Inert-Gas-Schweissen (WIG-Schweissen; auch: Tungsten-Inert-Gas-Welding, TIG-Welding) brennt der als Wärmequelle genutzte Lichtbogen zwischen der nicht abschmelzenden Wolframelektrode und dem Werkstück. Durch ein inertes Schutzgas wird das aufgeschmolzene Schweissgut vor der umgebenden Luft geschützt. In der erfindungsgemässen Anwendung des WIG-Schweissens wird Massivdraht aus demselben Material wie der Grundwerkstoff der zu schweissenden Elemente als Zusatzmaterial zugeführt.

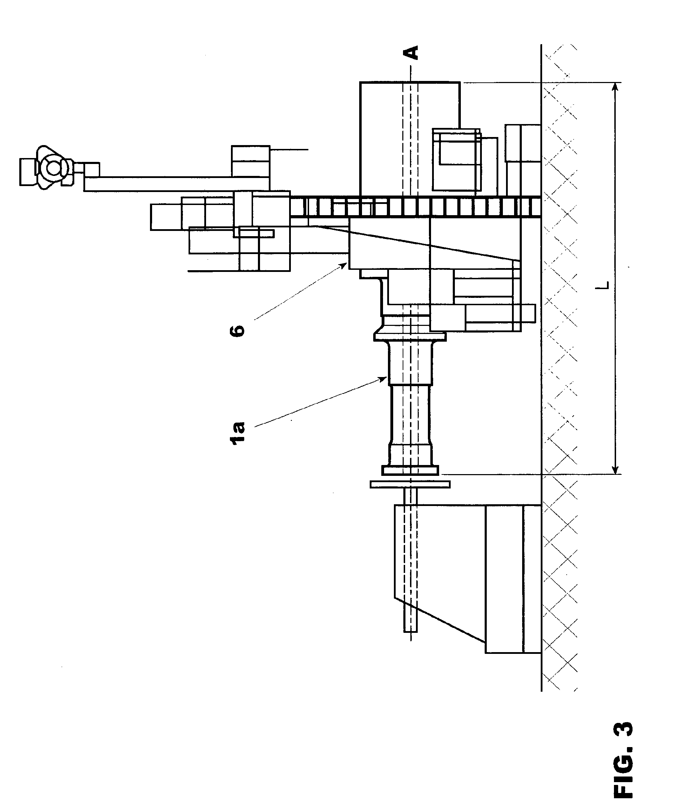

In dem in Figur 3 schematisch dargestellten vierten Herstellungsschritt wird die, wie oben beschrieben, vorzugsweise im WIG-Verfahren vorgeschweisste Rotorhälfte in einem zweiten Schweissprozess entsprechend einer Füllnahtschweissung, vorzugsweise in einem Unter-Pulver-Schweiss-Verfahren (UP-Schweissen; engl.: Submerged-Arc-Welding, SAW-Welding), nachbearbeitet. Dazu wird die vorgeschweisste Rotorhälfte von der vertikalen Position in eine im Wesentlichen horizontale bzw. waagerechte Lage gekippt. Das Ausfüllen der nach dem WIG-Verfahren übrig bleibenden Ringnut bzw. Engspaltnut oder Füllnaht geschieht vorzugsweise computergesteuert und vorzugsweise mit einem automatisierten Schweiss- und Naht-Positionierungssystem für enge Spalte mit zwei Drähten, das heisst, vorzugsweise wird ein Doppeldraht-Engspalt-Schweissen in Tandemanordnung unter Wechselstrom angewandt. Diese Drähte sind vorzugsweise aus dem gleichen Material gezogen wie der Grundwerkstoff, also das Material der Scheiben selbst.

Das Unter-Pulver-Schweissen (UP-Schweissen; engl.: Submerged Arc Welding, SAW-Welding) ist ein vollmechanisches Lichtbogen Schweissverfahren, bei dem ein unter Schweisspulver brennender Lichtbogen den Schweisszusatzwerkstoff abschmilzt. Das aufgeschmolzene Pulver schützt als Schlackeschicht das Schweissbad vor Luftzutritt und verbessert die Schweissnahtqualität. Insbesondere bezieht sich das UP-Schweissverfahren gemäss der vorliegenden Erfindung auf ein als UP-Engspaltschweissvorgang ausgerichtetes Doppeldrahtschweissen in Tandemanordnung. Grosse Vorteile des UP-Verfahrens sind dessen weitgehende Emissionsfreiheit, da der Lichtbogen innerhalb der Pulverschicht brennt und nur geringe Gasmengen freigesetzt werden, sowie dessen hoher thermischer Wirkungsgrad und die geringen Fehlerquellen.

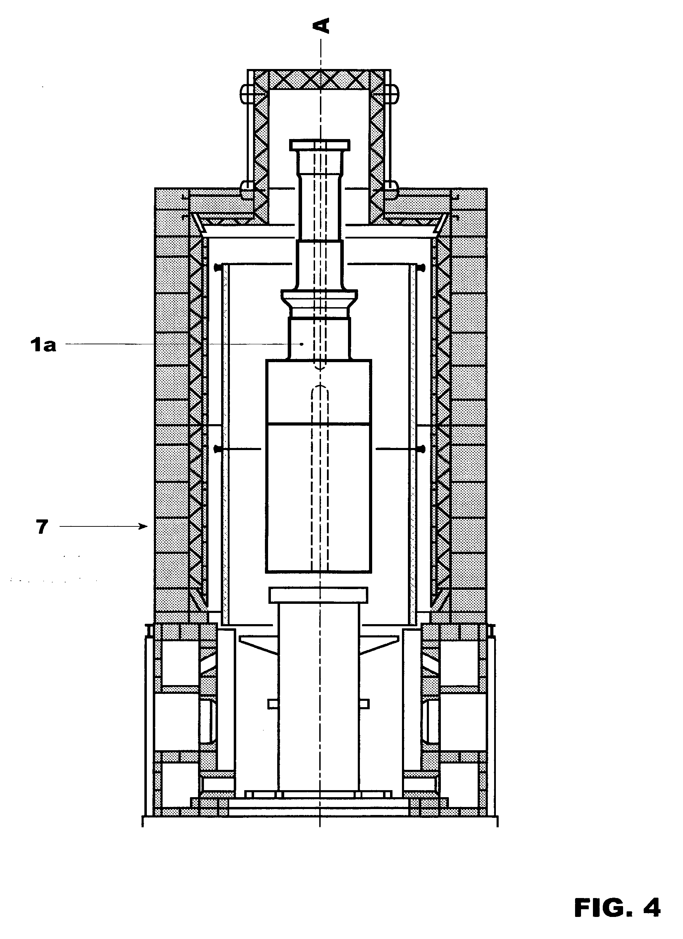

Anschliessend wird die fertig geschweisste und gegebenenfalls abgedrehte Rotorhälfte wieder in die Vertikale umgelagert, um in einem fünften Herstellungsschritt, wie in Fig. 4 schematisch dargestellt, einer Wärmebehandlung unterzogen (engl.: Post-Welding-Heat-Treatment, PWHT) zu werden. Dies geschieht vorzugsweise in Form von Spannungsarmglühen in einem Glühofen.

Das Spannungsarmglühen dient dem Abbau der durch das Schweissen bzw. der darauf folgenden unregelmässigen Abkühlung entstandenen inneren Eigenspannungen einer Stahlkonstruktion. Ohne den Fertigungsschritt des Spannungsarmglühens würden solche inneren Spannungen bei der Weiterverarbeitung und/oder nachfolgenden Wärmebehandlungen zu verzugsbedingten geometrischen Abweichungen oder sogar zu Brüchen führen. Beim Spannungsarmglühen werden andere Werkstoffeigenschaften, wie zum Beispiel Festigkeit und Duktilität nicht wesentlich verändert. Das Spannungsarmglühen wird meist in einem Glühofen in einem Temperaturbereich von 500°C - 750°C, bevorzugterweise 550°C - 650°C, durchgeführt, wobei der Werkstoff den Spannungen entsprechend plastisch zu fliessen beginnt. Dem Glühen folgt eine anschliessende langsame und kontrollierte Abkühlung im Ofen. Die Verwendung von Schweissdrähten aus dem gleichen Material wie die Scheiben selbst als Zusatzmaterial beim Schweissen bringt den Vorteil von möglichst homogenen Bedingungen beim Ausglühen mit sich.

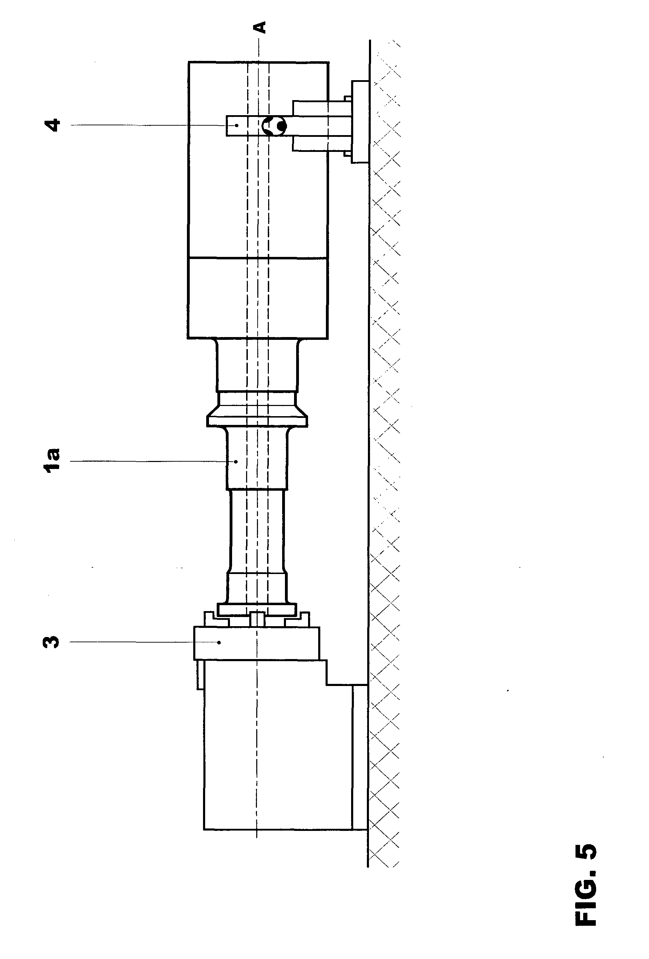

Nach dieser Wärmebehandlung wird die fertig behandelte, komplett vorgefertigte Rotorhälfte erneut in die Horizontale gekippt (siehe Figur 5). In dieser waagerechten Position untergeht die Rotorhälfte einer eventuellen Endbearbeitung und einer Qualitätskontrolle über Ultraschall (engl.: Nondestructive Testing, NDT-inspections) (sechster und siebenter Herstellungsschritt). Durch die modulare Fertigung der Rotorhälften ist es möglich, Fehler, die hier festgestellt werden, spezifisch an der betreffenden Rotorhälfte frühzeitig festzustellen und zu reparieren.

Die bisher beschriebenen Herstellungsschritte werden vorzugsweise für jede Rotorhälfte durchgeführt. Mit anderen Worten können auf diese Weise die Rotorenhälften in parallelen Verfahren vorgefertigt werden, bzw. wird jede Rotorhälfte gemäss den vorangehenden, in den Figuren 1-5 dargestellten Herstellungsschritten gefertigt.

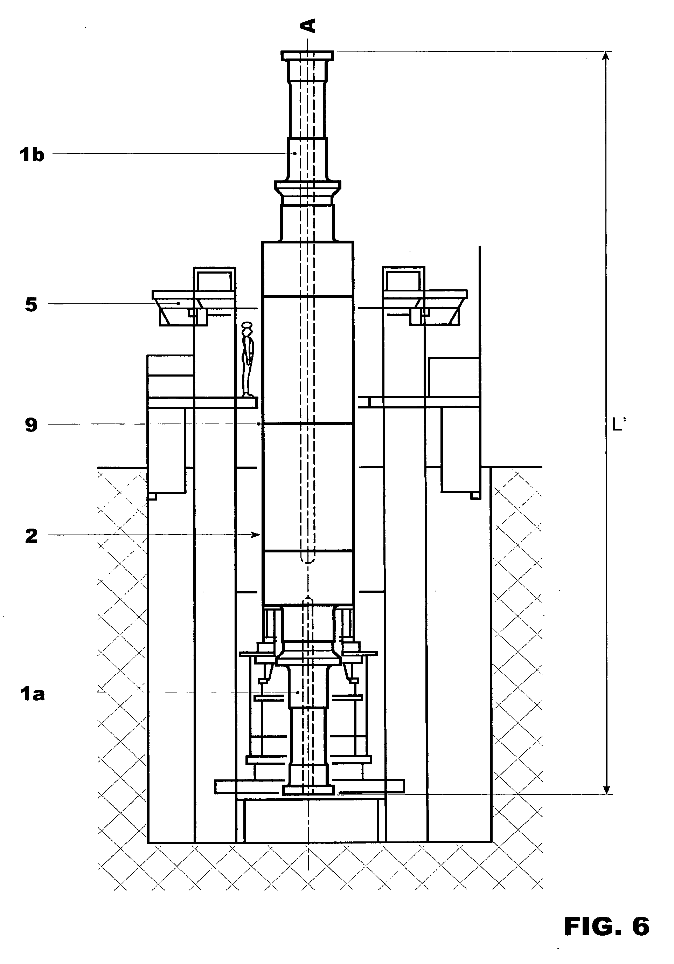

Fig. 6 zeigt eine schematische Ansicht des achten Herstellungsschrittes, in welchem zwei vorgefertigte Rotorhälften zusammengefügt werden. Dieser Herstellungsschritt wird vorzugsweise in derselben Anlage wie der zweite und der dritte Bearbeitungsschritt, welche in Fig. 2 dargestellt sind, durchgeführt. Dabei werden die Rotorhälften "back-to-back" aneinander montiert, das heisst, die Basis der einen Rotorhälfte berührt die Basis der zweiten Rotorhälfte. Als Basis ist die Unterseite der ersten Scheibe zu verstehen, welche im Scheibenstapel, der im zweiten Herstellungsschritt gebildet wird, zuunterst zu liegen kommt.

In dieser vertikalen Position wird in einem neunten Bearbeitungsschritt die Nut zwischen den Kontaktflächen zwischen den beiden Rotorhälften vorgeschweisst. Dies geschieht vorzugsweise wie bei der Herstellung der Rotorhälften bzw. wie bei der Zusammenschweissung der Scheibenstapel in einem automatischen WIG-Schweissverfahren.

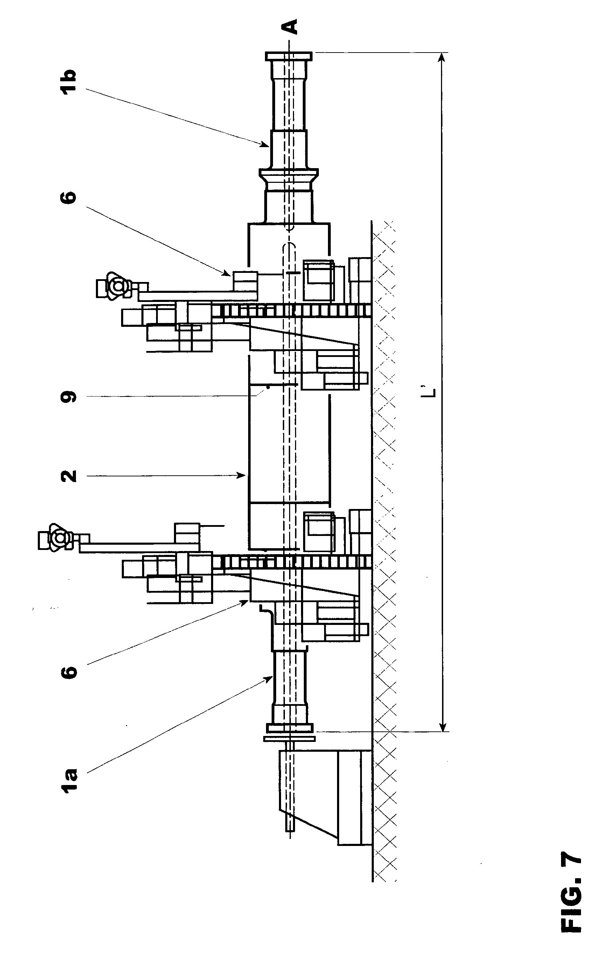

Um den in Fig. 7 dargestellten nächsten, bzw. zehnten Herstellungsschritt auszuführen, muss der aus zwei Rotorhälften zusammengefügte Rotor wieder von einer im Wesentlichen vertikalen in eine im Wesentlichen horizontale Position gekippt werden. In der horizontalen Position wird der Rotor dann in einem erneuten Füllnahtschweissverfahren fertiggeschweisst, wie oben beschrieben. Dieser letzte Schweissprozess entspricht vorzugsweise wiederum dem zweiten Schweissprozess in der Herstellung der einzelnen Rotorhälften aus einzelnen Scheiben, das heisst vorzugsweise wiederum einem UP-Schweissverfahren.

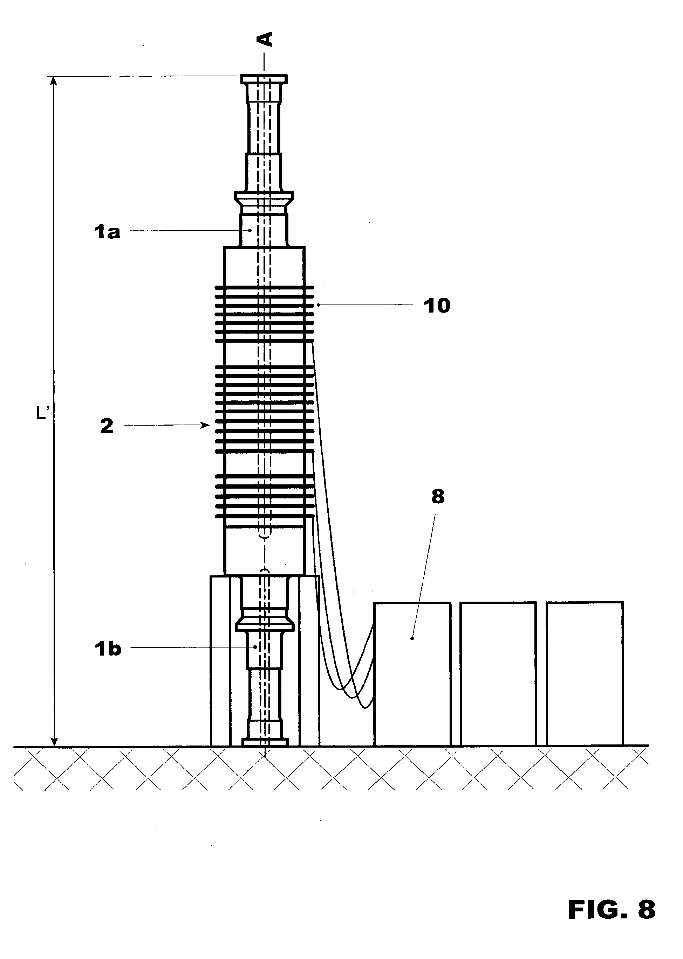

Zuletzt werden, wie in Fig. 8 schematisch dargestellt, der elfte und zwölfte Herstellungsschritt ausgeführt. Hier wird der Rotor spezifisch in seinen geschweissten Bereichen einer lokalen Wärmebehandlung ausgesetzt. Das vorzugsweise anzuwendende Spannungsarmglühverfahren wird an dieser Stelle nicht, wie bei der Wärmebehandlung der Rotorhälften in einem Glühofen durchgeführt, sodass das ganze Werkstück behandelt wird, sondern nur an lokalen Stellen des Rotors. Diese Konzentration des Spannungsarmglühens wird mittels Induktiv- und Widerstandselementen erreicht. Dazu ist kein grosser Heizkasten wie im herkömmlichen Spannungsarmglühverfahren nötig. Der Wärmebehandlung kann unter Umständen eine abtragende Drehbearbeitung bzw. eine Endbearbeitung des Rotors folgen.

Zusätzlich wird der fertige Rotor einer abschliessenden Qualitätskontrolle (NDT-Inspektionen) unterzogen, welche vorzugsweise mittels Ultraschall durchgeführt wird.

### BEZUGSZEICHENLISTE

- 1a: erste Rotorhälfte
- 1b: zweite Rotorhälfte
- 2: Rotor
- 3: Spannvorrichtung
- 4: Drehmaschine
- 5: erste Schweissmaschine für Grundnahtschweissung, WIG-Schweissmaschine
- 6: zweite Schweissmaschine für Füllnahtschweissung, UP-Schweissmaschine
- 7: Glühofen zum Spannungsarmglühen
- 8: lokale Spannungsarmglüh-Vorrichtung
- 9: Kontaktstelle der Befestigungslippen
- 10: Induktions- und/oder Widerstandselemente
- 11: Basis von 1a/1b
- 12: Körper von 1a/1b
- A: Längsachse von 1 a,1 b, und 2
- L: Länge von 1 a oder 1 b
- L': Länge von 2

## Patentansprüche

1. Verfahren zur Herstellung eines aus scheiben- und/oder trommelförmigen Elementen, insbesondere Scheiben zusammengeschweissten Rotors (2), wobei mittels einer Einrichtung diese Scheiben aufeinanderfolgend entlang einer Längsachse (A) axial zusammengefügt und in einem zweistufigen Schweissverfahren geschweisst werden,
wobei die Scheiben in einer horizontalen Lage vorgedreht werden, anschliessend in vertikaler Richtung bis zu einer vorbestimmten Grösse (L) aufeinander gestapelt werden, wobei nur das erste Schweissverfahren ausgeführt wird, während eine Längsachse (A) der zusammengefügten Scheiben sich noch in vertikaler Lagerung befindet, und wobei die durch das erste Schweissverfahren vorgeschweissten gestapelten Scheiben anschliessend wieder in die Horizontale gekippt werden, und dann das zweite Schweissverfahren an den mit ihrer Längsachse (A) horizontal ausgerichteten gestapelten Scheiben ausgeführt wird,
anschliessend an das zweite Schweissverfahren die vorgeschweissten Scheiben wieder in die Vertikale gekippt werden und in einer vertikalen Ausrichtung ihrer Längsachse (A) einer Wärmebehandlung in einem Spannungsarmglühverfahren unterzogen werden, wobei die Wärmebehandlung lokal stattfindet,
dann nach der Wärmebehandlung die aneinandergeschweissten Scheiben wieder in die Horizontale gekippt werden, und dass diese in einer horizontalen Ausrichtung ihrer Längsachse (A) einer abtragenden Drehbearbeitung unterzogen werden.

2. Verfahren nach Anspruch 1, **dadurch gekennzeichnet, dass** das erste Schweissverfahren eine Grundnahtschweissung, bevorzugterweise eine Wolfram-Inert-Gas-Schweissung ist, und dass das zweite Schweissverfahren eine Füllnahtschweissung, bevorzugterweise eine Unter-Pulver-Schweissung ist.

3. Verfahren nach einem der vorangehenden Ansprüche, **dadurch gekennzeichnet, dass** der Rotor nach dem zweiten Schweissverfahren geglüht und einer abtragenden Drehbearbeitung und/oder bevorzugterweise zusätzlich einer Qualitätsprüfung unterzogen wird.

4. Verfahren nach einem der vorhergehenden Ansprüche, **dadurch gekennzeichnet, dass** nach der Wärmebehandlung die aneinandergeschweissten Scheiben wieder in die Horizontale gekippt werden, und dass die diese in einer horizontalen Ausrichtung ihrer Längsachse A einer Qualitätsprüfung, insbesondere mittels Ultraschall, unterzogen werden.

5. Verfahren nach einem der vorangehenden Ansprüche, **dadurch gekennzeichnet, dass** das zweite Schweissverfahren ein Doppeldraht-Tandem-Engspalt-Verfahren ist.

6. Verfahren nach einem der vorangehenden Ansprüche, **dadurch gekennzeichnet, dass** der Rotor (2), nachdem er aus gestapelten Scheiben zusammen geschweisst wurde, einem lokalen Spannungsarmglühverfahren unterzogen wird, wobei lediglich Schweissnähte, die während des zweistufigen Schweissverfahrens entstanden sind, geglüht werden, und wobei insbesondere Induktivelemente und/oder Widerstandselemente (10) angewandt werden.

7. Verfahren nach einem der vorangehenden Ansprüche, **dadurch gekennzeichnet, dass** am Rotor (2) in einem letzten Herstellungschritt eine Qualitätssicherung mittels Ultraschall, bevorzugt nur an lokalen Stellen, insbesondere bevorzugt nur an Schweissnähten, ausgeführt wird.

8. Verfahren nach einem der vorangehenden Ansprüche, **dadurch gekennzeichnet, dass** beim ersten Schweissverfahren und/oder beim zweiten Schweissverfahren mindestens ein Zusatzdraht verwendet wird, welcher aus dem Grundwerkstoff des Rotors (2) gezogen wurde, wobei der Grundwerkstoff vorzugsweise ein niedrig-legierter, warm-fester, superclean- NiCrMo-Typ oder ein hoch-legierter 10-13% Cr-Typ, ein niedrig-legierter warm-fester CrMo-Typ oder ein niedrig-legierter warm-fester CrMoV-Typ ist.

9. Verfahren nach einem der vorangehenden Ansprüche, **dadurch gekennzeichnet, dass** es in einer im Wesentlichen vertikal ausgerichteten Produktionsanlage (5) und in einer im Wesentlichen horizontal ausgerichteten Produktionsanlage (6) durchgeführt wird, welche jeweils in der Lage sind, die Gesamtlänge (L') eines Rotors (2) aufzunehmen.

10. Verfahren nach einem der vorangehenden Ansprüche, **dadurch gekennzeichnet, dass** mindestens 2, bevorzugt 3-10, insbesondere bevorzugt 5-7 Scheiben zu einer Rotorhälfte (1a, 1b) zusammengefügt werden.

11. Verfahren nach Anspruch 10, **dadurch gekennzeichnet, dass** die Scheiben in vertikaler Ausrichtung bis zum Erreichen einer vorbestimmten Länge (L) einer Rotorhälfte (1a,1b) aufeinander gestapelt werden.

12. Verfahren nach Anspruch 10 oder 11, wobei die Rotorhälften (1a,1b) nach einem Verfahren nach einem der Ansprüche 1-7 hergestellt werden.

13. Verfahren nach einem der Ansprüche 10-12, **dadurch gekennzeichnet, dass** der Rotor (2) aus zwei aus Scheiben vorgefertigten Rotorhälften (1a,1b) zusammengeschweisst wird, wobei jede Rotorhälfte (1a, 1b) eine Basis (11) und einen Körper (12) aufweist, und dass die Basis (11) der ersten Rotorhälfte (1a) an die Basis (11) der zweiten Rotorhälfte (1 b) geschweisst wird.

14. Verfahren nach einem der Ansprüche 10-13, **dadurch gekennzeichnet, dass** der Rotor (2) in einem zweistufigen Schweissverfahren aus zwei vorgefertigten Rotorhälften (1 a,1 b) zusammengeschweisst wird, wobei das erste Schweissverfahren in einer vertikalen Ausrichtung der Längsachse (A) der Rotorhälfte (1a,1b) erfolgt und das zweite Schweissverfahren in einer horizontalen Ausrichtung der Längsachse (A) der Rotorhälfte (1a,1b) erfolgt.

15. Verfahren nach einem der Ansprüche 10-14, **dadurch gekennzeichnet, dass** zur Verbindung der beiden Rotorhälften (1a,1b) zuerst eine Grundnahtschweissung, bevorzugterweise eine Wolfram-Inert-Gas-Schweissung, und anschliessend eine Füllnahtschweissung, bevorzugterweise eine Unter-Pulver-Schweissung durchgeführt wird.

16. Verfahren nach einem der Ansprüche 10-15, **dadurch gekennzeichnet, dass** der Rotor (2) in vertikaler Ausrichtung in einem ersten Schweissverfahren vorgeschweisst wird, dass der vorgeschweisste Rotor (2) in die Horizontale gekippt wird und in horizontaler Ausrichtung in einem zweiten Schweissverfahren nachbearbeitet wird, wobei der Rotor (2) in der vertikalen Ausrichtung gegebenenfalls einer abtragenden Drehbearbeitung unterzogen wird, und dass der Rotor (2) anschliessend wieder in die Vertikale gekippt wird, wobei der Rotor (2) in der vertikalen Ausrichtung einem Spannungsarmglühverfahren, bevorzugt nur an lokalen Stellen, insbesondere bevorzugt nur an geschweissten Stellen, unterzogen wird.

17. Verfahren nach einem der vorangehenden Ansprüche, **dadurch gekennzeichnet, dass** ein Rotor (2) aus zwei Rotorhälften (1 a,1 b) gleicher Länge (L) besteht.

## Claims

1. Process for producing a rotor (2) which is made by welding together disk-shaped and/or drum-shaped elements, in particular disks, wherein a device is used to join these disks together axially in sequence along a longitudinal axis (A) and these disks are welded in a two-stage welding process, wherein the disks are rough-turned in a horizontal position and are then stacked on top of each other in the vertical direction up to a predetermined size (L), only the first welding process being carried out while a longitudinal axis (A) of the disks which have been joined together is still in a vertical orientation, and wherein the stacked disks, which are prewelded by the first welding process, are then tilted back into the horizontal position, and then the second welding process is carried out on the stacked disks, the longitudinal axis (A) of which is oriented horizontally,
the second welding process is followed by tilting the prewelded disks back into the vertical position, and subjecting these disks, when their longitudinal axis (A) is in a vertical orientation, to heat treatment in a stress relief annealing process, the heat treatment taking place locally,
then, after the heat treatment, the disks which have been welded to each other are tilted back into the horizontal position, and these disks, when their longitudinal axis (A) is in a horizontal orientation, are subjected to a material-removing turning operation.

2. Process according to Claim 1, **characterized in that** the first welding process is a root welding process, preferably a tungsten inert gas welding process, and **in that** the second welding process is a filler welding process, preferably a submerged arc welding process.

3. Process according to either of the preceding claims, **characterized in that**, after the second welding process, the rotor is annealed and subjected to a material-removing turning operation and/or preferably additionally a quality testing operation.

4. Process according to one of the preceding claims, **characterized in that**, after the heat treatment, the disks which have been welded to each other are tilted back into the horizontal position, and **in that** these disks, when their longitudinal axis A is in a horizontal orientation, are subjected to a quality testing operation, in particular by means of ultrasound.

5. Process according to one of the preceding claims, **characterized in that** the second welding process is a twin-wire tandem narrow gap process.

6. Process according to one of the preceding claims, **characterized in that** the rotor (2) is subjected to a local stress relief annealing process after it has been made by welding together stacked disks, only weld seams which are produced during the two-stage welding process being annealed, wherein use is made, in particular, of inductive elements and/or resistance elements (10).

7. Process according to one of the preceding claims, **characterized in that** a quality assurance operation is carried out by means of ultrasound on the rotor (2) in a last production step, preferably only at local sites, particularly preferably only at weld seams.

8. Process according to one of the preceding claims, **characterized in that** at least one auxiliary wire which has been drawn from the base material of the rotor (2) is used during the first welding process and/or during the second welding process, wherein the base material is preferably a low-alloy, heat-resistant, superclean NiCrMo grade or a high-alloy 10-13% Cr grade, a low-alloy, heat-resistant CrMo grade or a low-alloy, heat-resistant CrMoV grade.

9. Process according to one of the preceding claims, **characterized in that** it is carried out in a substantially vertically oriented production system (5) and in a substantially horizontally oriented production system (6), which are each capable of receiving the overall length (L') of a rotor (2).

10. Process according to one of the preceding claims, **characterized in that** at least 2, preferably 3-10, particularly preferably 5-7 disks are joined together to form a rotor half (1a, 1b).

11. Process according to Claim 10, **characterized in that** the disks are stacked on top of each other in a vertical orientation until a predetermined length (L) of a rotor half (1a, 1b) is reached.

12. Process according to Claim 10 or 11, wherein the rotor halves (1a, 1b) are produced by means of the process as claimed in one of claims 1-7.

13. Process according to one of Claims 10-12, **characterized in that** the rotor (2) is made by welding together two rotor halves (1a, 1b) which are prefabricated from disks, each rotor half (1a, 1b) having a base (11) and a body (12), and **in that** the base (11) of the first rotor half (1a) is welded to the base (11) of the second rotor half (1b).

14. Process according to one of Claims 10-13, **characterized in that** the rotor (2) is made by welding two prefabricated rotor halves (1a, 1b) together in a two-stage welding process, the first welding process being carried out when the longitudinal axis (A) of the rotor half (1a, 1b) is in a vertical orientation, and the second welding process being carried out when the longitudinal axis (A) of the rotor half (1a, 1b) is in a horizontal orientation.

15. Process according to one of Claims 10-14, **characterized in that** the two rotor halves (1a, 1b) are joined together by first carrying out a root welding process, preferably a tungsten inert gas welding process, and then a filler welding process, preferably a submerged arc welding process.

16. Process according to one of Claims 10-15, **characterized in that** the rotor (2) is prewelded in a vertical orientation in a first welding process, **in that** the prewelded rotor (2) is tilted into the horizontal position and subsequently processed in a horizontal orientation in a second welding process, the rotor (2) being subjected, if appropriate, to a material-removing turning operation in the vertical orientation, and **in that** the rotor (2) is then tilted back into the vertical position, the rotor (2) being subjected, in the vertical orientation, to a stress relief annealing process, preferably only at local sites, particularly preferably only at welded sites.

17. Process according to one of the preceding claims, **characterized in that** a rotor (2) comprises two rotor halves (1a, 1b) of equal length (L).

## Revendications

1. Procédé de fabrication d'un rotor (2) assemblé par soudage d'éléments en forme de disque et/ou de tambour, en particulier de disques, ces disques étant assemblés axialement les uns après les autres le long d'un axe longitudinal (A) au moyen d'un dispositif et étant soudés dans un procédé de soudage à deux étapes,
les disques étant préalablement tournés dans une position horizontale puis étant empilés les uns au-dessus des autres dans la direction verticale jusqu'à une taille prédéterminée (L), seul le premier procédé de soudage étant mis en oeuvre tandis qu'un axe longitudinal (A) des disques assemblés se trouve encore dans une position verticale et les disques empilés préalablement soudés par le premier procédé de soudage étant ensuite à nouveau basculés à l'horizontale puis le deuxième procédé de soudage étant mis en oeuvre sur les disques empilés avec leur axe longitudinal (A) orienté horizontalement,
suite au deuxième procédé de soudage, les disques soudés préalablement étant à nouveau basculés à la verticale et, dans une orientation verticale de leur axe longitudinal (A), étant soumis à un traitement thermique dans un procédé de recuit à faible tension, le traitement thermique ayant lieu localement,
puis, après le traitement thermique, les disques assemblés les uns aux autres par soudage étant à nouveau basculés à l'horizontale et, dans une orientation horizontale de leur axe longitudinal (A), étant soumis à un usinage par tournage avec enlèvement de copeaux.

2. Procédé selon la revendication 1, **caractérisé en ce que** le premier procédé de soudage est un soudage à la racine, de préférence un soudage sous gaz inerte de tungstène et **en ce que** le deuxième procédé de soudage est un soudage de remplissage, de préférence un soudage sous flux en poudre.

3. Procédé selon l'une quelconque des revendications précédentes, **caractérisé en ce que** le rotor, après le deuxième procédé de soudage, est recuit et est soumis à un usinage par tournage avec enlèvement de copeaux et/ou de préférence en outre à un contrôle de qualité.

4. Procédé selon l'une quelconque des revendications précédentes, **caractérisé en ce qu'**après le traitement thermique, les disques assemblés par soudage sont à nouveau basculés à l'horizontale et **en ce qu'**ils sont soumis dans une orientation horizontale de leur axe longitudinal (A) à un contrôle de qualité, en particulier par ultrasons.

5. Procédé selon l'une quelconque des revendications précédentes, **caractérisé en ce que** le deuxième procédé de soudage est un procédé de soudage à tandem double fil à fente étroite.

6. Procédé selon l'une quelconque des revendications précédentes, **caractérisé en ce que** le rotor (2), après avoir été assemblé par soudage de disques empilés, est soumis à un procédé de recuit à faible tension local, seuls les cordons de soudure produits pendant le procédé de soudage en deux étapes étant recuits, et notamment des éléments inductifs et/ou des éléments à résistance (10) étant utilisés.

7. Procédé selon l'une quelconque des revendications précédentes, **caractérisé en ce que** l'on effectue sur le rotor (2), dans la dernière étape de fabrication, un contrôle de qualité par ultrasons, de préférence uniquement à des emplacements locaux, notamment de préférence uniquement au niveau des cordons de soudure.

8. Procédé selon l'une quelconque des revendications précédentes, **caractérisé en ce que** lors du premier procédé de soudage et/ou lors du deuxième procédé de soudage, au moins un fil supplémentaire est utilisé, lequel est tiré du matériau de base du rotor (2), le matériau de base étant de préférence un type NiCrMo super propre, résistant à la chaleur, faiblement allié ou un type Cr hautement allié à 10-13 %, un type CrMo résistant à la chaleur, faiblement allié ou un type CrMoV résistant à la chaleur, faiblement allié.

9. Procédé selon l'une quelconque des revendications précédentes, **caractérisé en ce qu'**il est mis en oeuvre dans une installation de production (5) orientée essentiellement verticalement et dans une installation de production (6) orientée essentiellement horizontalement, qui sont en mesure de recevoir la longueur totale (L') d'un rotor (2).

10. Procédé selon l'une quelconque des revendications précédentes, **caractérisé en ce qu'**au moins 2, de préférence 3 à 10, en particulier de préférence 5 à 7 disques sont rassemblés pour former une moitié de rotor (1a, 1b).

11. Procédé selon la revendication 10, **caractérisé en ce que** les disques sont empilés les uns au-dessus des autres dans une orientation verticale jusqu'à l'obtention d'une longueur prédéterminée (L) d'une moitié de rotor (1a, 1b).

12. Procédé selon la revendication 10 ou 11, dans lequel les moitiés de rotor (1a, 1b) sont fabriquées selon un procédé selon l'une quelconque des revendications 1 à 7.

13. Procédé selon l'une quelconque des revendications 10 à 12, **caractérisé en ce que** le rotor (2) est assemblé par soudage de deux moitiés de rotor (1a, 1b) préfabriquées à partir de disques, chaque moitié de rotor (1a, 1b) présentant une base (11) et un corps (12), et **en ce que** la base (11) de la première moitié de rotor (1a) est soudée à la base (11) de la deuxième moitié de rotor (1b).

14. Procédé selon l'une quelconque des revendications 10 à 13, **caractérisé en ce que** le rotor (2) est assemblé par soudage de deux moitiés de rotor préfabriquées (1a, 1b) dans un procédé de soudage à deux étapes, le premier procédé de soudage s'effectuant dans une orientation verticale de l'axe longitudinal (A) des moitiés de rotor (1a, 1b) et le deuxième procédé de soudage s'effectuant dans une orientation horizontale de l'axe longitudinal (A) des moitiés de rotor (1a, 1b).

15. Procédé selon l'une quelconque des revendications 10 à 14, **caractérisé en ce que** pour la connexion des deux moitiés de rotor (1a, 1b), on effectue tout d'abord un soudage à la racine, de préférence un soudage sous gaz inerte de tungstène et ensuite un soudage de remplissage, de préférence un soudage sous flux en poudre.

16. Procédé selon l'une quelconque des revendications 10 à 15, **caractérisé en ce que** le rotor (2) est préalablement soudé dans un premier procédé de soudage dans une orientation verticale, **en ce que** le rotor (2) préalablement soudé est basculé à l'horizontale et est post-usiné dans l'orientation horizontale dans un deuxième procédé de soudage, le rotor (2) étant éventuellement soumis dans l'orientation verticale à un usinage par tournage avec enlèvement de copeaux, et **en ce que** le rotor (2) est ensuite à nouveau basculé à la verticale, le rotor (2), dans l'orientation verticale, étant soumis à un procédé de recuit à faible tension, de préférence uniquement à des emplacements locaux, notamment de préférence uniquement au niveau des zones soudées.

17. Procédé selon l'une quelconque des revendications précédentes, **caractérisé en ce qu'**un rotor (2) se compose de deux moitiés de rotor (1a, 1b) de même longueur (L).
